# EUROPEAN PATENT APPLICATION

(11) **EP 4 641 094 A1**
(43) Date of publication of application: **29.10.2025**
(21) Application number: 23906563.4
(22) Date of filing: 20.11.2023
(51) Int. Cl.: F24C 15/10, C03C 17/34, C03C 17/42

(54) **COOKER TOP PLATE AND MANUFACTURING METHOD FOR COOKER TOP PLATE**

(30) Priority: 23.12.2022 JP 2022206763
(71) Applicant: Nippon Electric Glass Co., Ltd., Otsu-shi, Shiga 520-8639 (JP)
(72) Inventor: FUKUI, Etsuji, Otsu-shi, Shiga 520-8639 (JP)
(74) Representative: Tetzner, Michael
(86) International application number: PCT/JP2023/041581
(87) International publication number: WO 2024/135194

(57) **Abstract**

Provided is a cooker top plate capable of increasing both the scratch resistance and the adhesion of the inorganic layer. A cooker top plate 1 includes: a glass substrate 2 having a cooking surface 2a on which a cooking utensil is to be put and a back surface 2b on an opposite side to the cooking surface 2a; and an inorganic layer 3 located on the back surface 2b side of the glass substrate 2, wherein the inorganic layer 3 contains a glass, a color pigment, and an extender pigment having an average particle diameter of less than 0.5 µm.

## Description

### [Technical Field]

The present invention relates to cooker top plates and methods for manufacturing cooker top plates.

### [Background Art]

Cookers including a cooker top plate and a light source, such as an LED (light emitting diode), are widely used. The cooker top plate for use in combination with a light source generally includes: a transmissive portion that transmits light from the light source; and a non-transmissive portion that shields light from the light source. The user of the cooker can visually recognize, through light having been emitted from the light source and having passed through the transmissive portion, luminous signs (various information) representing a power-on or -off state, a heating state, and so on.

For example, Patent Literature 1 below discloses a cooker top plate including a glass substrate having: a cooking surface on which a cooking utensil is to be put; and an underside surface opposite to the cooking surface, wherein the cooker top plate is provided with: a transmissive portion that transmits light from the light source; and a non-transmissive portion that shields light from the light source. In this cooker top plate, the transmissive portion includes a first colored layer provided on the glass substrate, the non-transmissive portion includes a light-shielding layer provided on the glass substrate, and the color difference ΔE in the L*a*b* color system between the transmissive portion and the non-transmissive portion measured from the cooking surface side of the glass substrate is 2 or less. Furthermore, Patent Literature 1 describes an aspect in which the first colored layer is a layer composed of a glass and a color pigment.

### [Citation List]

### [Patent Literature]

[PTL 1]
JP-A-2020-186905

### [Summary of Invention]

### [Technical Problem]

In some kinds of cooker top plates, as described in Patent Literature **1,** a layer (an inorganic layer) containing a glass and a color pigment is disposed on the underside surface of the glass substrate. In the inorganic layer, the light transmissiveness of the inorganic layer can be adjusted, for example, by adjusting the content of the color pigment.

However, such a conventional inorganic layer containing a glass and a color pigment may not be able to sufficiently increase the scratch resistance and the adhesion of the inorganic layer. If the scratch resistance and the adhesion of the inorganic layer of the cooker top plate are low, upon contact of the inorganic layer with surrounding parts in the cooker, for example, in the process of assembling the cooker, the inorganic layer may get scuffs and scratches thereon or may be peeled off from the glass substrate.

An object of the present invention is to provide a cooker top plate capable of increasing both the scratch resistance and the adhesion of the inorganic layer. Furthermore, an object of the present invention is to provide a method for manufacturing a cooker top plate by which both the scratch resistance and the adhesion of the inorganic layer can be increased.

### [Solution to Problem]

Hereinafter, a description will be given of aspects of a cooker top plate and aspects of a method for manufacturing a cooker top plate as solutions to the above problem.

A cooker top plate of aspect 1 in the present invention includes: a glass substrate having a cooking surface on which a cooking utensil is to be put and a back surface on an opposite side to the cooking surface; and an inorganic layer located on the back surface side of the glass substrate, and the inorganic layer contains a glass, a color pigment, and an extender pigment having an average particle diameter of less than 0.5 µm.

A cooker top plate of aspect 2 is the cooker top plate according to aspect 1, wherein, preferably, the cooker top plate includes a transmissive portion that transmits light from a light source and the transmissive portion includes the inorganic layer.

A cooker top plate of aspect 3 is the cooker top plate according to aspect 1 or 2, wherein the extender pigment preferably contains barium sulfate.

A cooker top plate of aspect 4 is the cooker top plate according to any one of aspects 1 to 3, wherein a content of the extender pigment per 100% by mass of the inorganic layer is preferably not less than 10% by mass and not more than 55% by mass.

A cooker top plate of aspect 5 is the cooker top plate according to any one of aspects 1 to 4, wherein the color pigment preferably has an average particle diameter of not less than 0.4 µm and not more than 3 µm.

A cooker top plate of aspect 6 is the cooker top plate according to any one of aspects 1 to 5, wherein, preferably, the cooker top plate includes a non-transmissive portion that shields light from the light source and the non-transmissive portion includes a light-shielding layer provided on the inorganic layer.

A cooker top plate of aspect 7 in the present invention includes: a glass substrate having a cooking surface on which a cooking utensil is to be put and a back surface on an opposite side to the cooking surface; and an inorganic layer located on the back surface side of the glass substrate, and the inorganic layer contains a glass, a color pigment, and barium sulfate.

A method for manufacturing a cooker top plate of aspect 8 in the present invention is a method for manufacturing a cooker top plate including: a glass substrate having a cooking surface on which a cooking utensil is to be put and a back surface on an opposite side to the cooking surface; and an inorganic layer located on the back surface side of the glass substrate, and includes the steps of: applying a paste for forming an inorganic layer to the back surface side of the glass substrate; and firing the glass substrate to which the paste for forming an inorganic layer is applied, wherein the paste for forming an inorganic layer contains a glass frit, a color pigment, and an extender pigment having an average particle diameter of less than 0.5 µm.

A method for manufacturing a cooker top plate of aspect 9 is the method for manufacturing a cooker top plate according to aspect 8, wherein the extender pigment preferably contains barium sulfate.

### [Advantageous Effects of Invention]

The present invention enables provision of a cooker top plate capable of increasing both the scratch resistance and the adhesion of the inorganic layer. Furthermore, the present invention enables provision of a method for manufacturing a cooker top plate by which both the scratch resistance and the adhesion of the inorganic layer can be increased.

### [Brief Description of Drawings]

[Fig. 1]

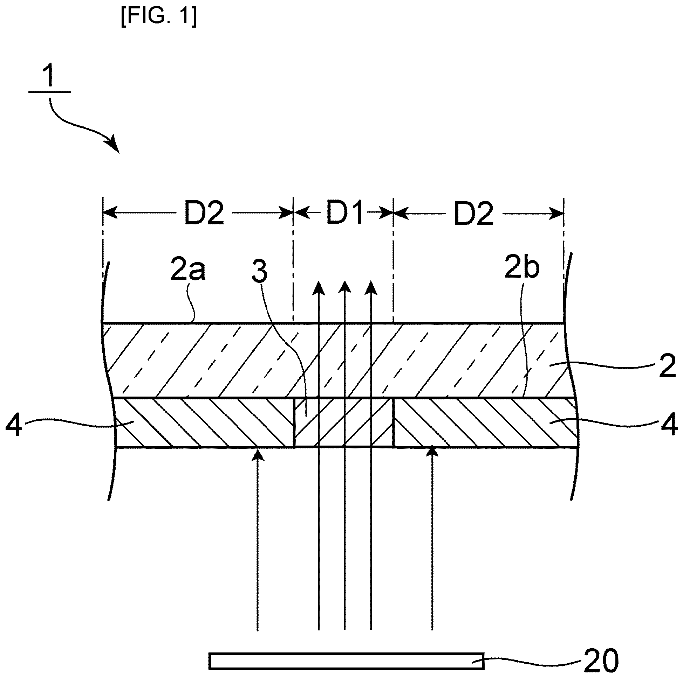

   Fig. 1 is a schematic cross-sectional view showing a cooker top plate according to a first embodiment of the present invention.
[Fig. 2]

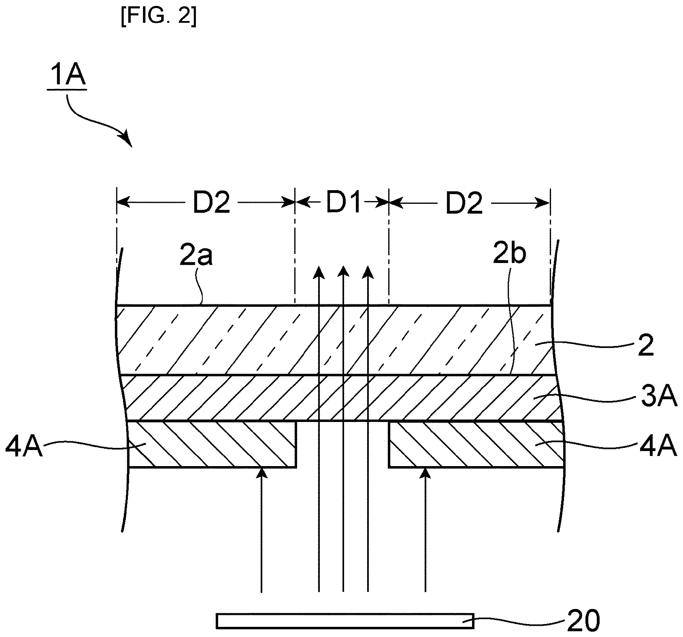

   Fig. 2 is a schematic cross-sectional view showing a cooker top plate according to a second embodiment of the present invention.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

Herein, "cooker top plate" may be abbreviated as "top plate".

### [First Embodiment]

Fig. 1 is a schematic cross-sectional view showing a cooker top plate according to a first embodiment of the present invention.

A cooker top plate 1 shown in Fig. 1 includes a glass substrate 2. The glass substrate 2 has a cooking surface 2a and an back surface 2b. The cooking surface 2a and the back surface 2b are surfaces opposed to each other. The cooking surface 2a is a surface located on the side of the substrate where a cooking utensil, such as a pot or a frying pan, is to be put. The back surface 2b is a surface located toward the interior side of the cooker and facing toward a light source and a heater. Therefore, the cooking surface 2a and the back surface 2b are front and back sides of the same substrate.

An inorganic layer 3 is located on the back surface 2b side of the glass substrate 2. The back surface 2b of the glass substrate 2 is in contact with the inorganic layer **3.** The inorganic layer 3 contains a glass, a color pigment, and an extender pigment having an average particle diameter of less than 0.5 µm.

A light-shielding layer 4 is disposed on the back surface 2b side of the glass substrate 2. The back surface 2b of the glass substrate 2 is in contact with the light-shielding layer 4. In the top plate 1, unlike a top plate 1A shown in Fig. 2 and to be described hereinafter, the back surface 2b of the glass substrate 2 is in contact with the light-shielding layer 4. In the top plate 1, the light-shielding layer 4 may not be disposed on one surface of the inorganic layer 3 located on the opposite side to the other surface thereof next to the glass substrate 2. In the top plate 1, the light-shielding layer 4 may be disposed on an end portion of one surface of the inorganic layer 3 located on the opposite side to the other surface thereof next to the glass substrate 2. In the case where the light-shielding layer 4 is disposed on the end portion of one surface of the inorganic layer 3 located on the opposite side to the other surface thereof next to the glass substrate 2, the light-shielding layer 4 may be disposed over a range of 0 mm to 2 mm inwardly from the end of the inorganic layer 3 or over a range of 0 mm to 5 mm from the end of the inorganic layer 3.

A light source 20 is provided below the top plate 1. Examples of the light source 20 include a light source constituted by an LED and a light source constituted by a liquid crystal component.

The top plate 1 includes: a transmissive portion D1 that transmits light from the light source 20; and a non-transmissive portion D2 that shields light from the light source 20. In the top plate 1, the inorganic layer 3 is a layer capable of transmitting light from the light source 20, and the light-shielding layer 4 is a layer for use in shielding light from the light source 20. The transmissive portion D1 of the top plate 1 includes the inorganic layer 3 and, more specifically, includes no light-shielding layer and includes the inorganic layer 3 and the glass substrate 2. The non-transmissive portion D2 of the top plate 1 includes the light-shielding layer 4 and, more specifically, includes the light-shielding layer 4 and the glass substrate 2. However, in the case where the light-shielding layer 4 is disposed on the end portion of one surface of the inorganic layer 3 located on the opposite side to the other surface thereof next to the glass substrate 2, a portion of the top plate 1 including the light-shielding layer 4, the inorganic layer 3, and the glass substrate 2 is also included in the non-transmissive portion D2. The transmissive portion D1 corresponds to a portion of the top plate 1 where the light-shielding layer 4 is not disposed. The non-transmissive portion D2 corresponds to a portion of the top plate 1 where the light-shielding layer 4 is disposed.

Light from the light source 20 is emitted through the transmissive portion D1 to the outside (above the top plate 1) and shielded by the non-transmissive portion D2. When the top plate 1 is viewed in plan, the transmissive portion D1 is a region where information is displayed by the light from the light source 20. Examples of the information include information on a state of the cooker, such as information representing that the power is on and information representing that the cooker is heating. The top plate 1 can emit, to the outside, light meeting the shape of the transmissive portion D1 in plan view, for example, by changing the shape of the transmissive portion D1 in plan view and can display characters, numbers, symbols, and so on. Furthermore, the top plate 1 can display characters, numbers, symbols, and so on by passing patterned light through the transmissive portion D1. Alternatively, the top plate 1 can display characters, numbers, symbols, and so on by passing light from a liquid crystal component through the transmissive portion D1.

Since, in the top plate 1, the inorganic layer 3 contains a glass, a color pigment, and an extender pigment having an average particle diameter of less than 0.5 µm, the scratch resistance and the adhesion of the inorganic layer 3 can be increased. In the top plate 1, the adhesion between the glass substrate 2 and the inorganic layer 3 and the scratch resistance of the inorganic layer 3 can be increased.

Also when the inorganic layer 3 contains a glass, a color pigment, and barium sulfate, the scratch resistance and the adhesion of the inorganic layer 3 can be increased. In this case, the average particle diameter of barium sulfate in the inorganic layer 3 is preferably less than 0.5 µm.

Hereinafter, a description will be given of details of the members and layers constituting the top plate 1.

### (Glass Substrate)

The glass substrate 2 is preferably a glass substrate that transmits light in at least a part (for example, at 580 nm) of a wavelength range of 450 nm to 700 nm. The glass substrate 2 is preferably a clear glass substrate. The glass substrate 2 may be clear and colored, but is preferably clear and colorless from the viewpoint of further improving the aesthetic appearance of the top plate 1. Note that, herein, "clear" of the glass substrate means that the light transmittance in at least part (for example, at 580 nm) of a visible wavelength range of 450 nm to 700 nm is 70% or more.

The top plate 1 undergoes heating and cooling repeatedly. Therefore, the glass substrate 2 preferably has high thermal shock resistance and a low coefficient of thermal expansion. Specifically, the softening temperature of the glass substrate 2 is preferably not lower than 700°C and more preferably not lower than 750°C. Furthermore, the average coefficient of linear thermal expansion of the glass substrate 2 at 30°C to 750°C is preferably in a range of -10 × 10⁻⁷/°C to +60 × 10⁻⁷/°C, more preferably in a range of -10 × 10⁻⁷/°C to +50 × 10⁻⁷/°C, and even more preferably in a range of -10 × 10⁻⁷/°C to +40 × 10⁻⁷/°C. For example, the glass substrate 2 is preferably made of a low-expansion crystallized glass. A specific example of the low-expansion crystallized glass is a LAS-based crystallized glass "N-0" manufactured by Nippon Electric Glass Co., Ltd. A borosilicate glass substrate, a quartz glass substrate or the like may be used as the glass substrate 2.

The thickness of the glass substrate 2 is not particularly limited. The thickness of the glass substrate 2 can be appropriately selected according to the light transmittance and so on. The thickness of the glass substrate 2 may be, for example, about 2 mm to about 6 mm.

### (Inorganic Layer)

The inorganic layer 3 is disposed on the back surface 2b side of the glass substrate 2. The inorganic layer 3 is in contact with the back surface 2b of the glass substrate 2. In the present invention, another layer may be disposed between the inorganic layer 3 and the glass substrate 2. The inorganic layer 3 is a layer capable of transmitting light from the light source 20. The inorganic layer 3 contains a glass, a color pigment, and an extender pigment having an average particle diameter of less than 0.5 µm. The light transmittance of the inorganic layer 3 can be adjusted, for example, by adjusting the type and/or content of the color pigment in the inorganic layer 3.

### <Glass>

The inorganic layer 3 contains a glass. Known glasses can be used as the glass. The glass may be used as a single type or in combination of two or more types.

Example of the glass include borosilicate-based glasses, silicate-based glasses containing at least one of an alkali metal component and an alkaline earth metal component, and phosphate-based glasses containing zinc and aluminum.

The content of the glass in the inorganic layer 3 (the content of the glass per 100% by mass of inorganic layer) is preferably not less than 10% by mass, more preferably not less than 20% by mass, preferably not more than 60% by mass, and more preferably not more than 40% by mass. If the content of the glass is less than the above lower limit, the heat resistance of the top plate 1 is likely to decrease, and the scratch resistance and the adhesion of the inorganic layer 3 are likely to decrease. On the other hand, if the content of the glass exceeds the above upper limit, the mechanical strength of the top plate 1 is likely to decrease.

### <Color Pigment>

The inorganic layer 3 contains a color pigment. With the use of the color pigment, the light transmittance of the inorganic layer 3 can be adjusted. The color pigment may be used as a single type or in combination of two or more types.

The type of the color pigment is not particularly limited so long as it is a colored pigment. Examples of the color pigment include: white pigment powders, such as TiO₂ powder, ZrO₂ powder, and ZrSiO₄ powder; blue inorganic pigment powders containing Co; green inorganic pigment powders containing Co; Ti-Sb-Cr-based or Ti-Ni-based yellow inorganic pigment powders; Co-Si-based red inorganic pigment powders; brown inorganic pigment powders containing Fe; black inorganic pigment powders containing Cu; and pearlish inorganic pigment powders.

Examples of the blue inorganic pigment powders containing Co include Co-Al-based and Co-Al-Ti-based inorganic pigment powders. An example of the Co-Al-based inorganic pigment powders is CoAl₂O₄ powder. An example of the Co-Al-Ti-based inorganic pigment powders is CoAl₂O₄-TiO₂-Li₂O powder.

Examples of the green inorganic pigment powders containing Co include Co-Al-Cr-based and Co-Ni-Ti-Zn-based inorganic pigment powders. An example of the Co-Al-Cr-based inorganic pigment powders is Co (Al, Cr)₂O₄ powder. An example of the Co-Ni-Ti-Zn-based inorganic pigment powders is (Co, Ni, Zn)₂TiO₄ powder.

Examples of the brown inorganic pigment powders containing Fe include Fe-Zn-based inorganic pigment powders. An example of the Fe-Zn-based inorganic pigment powders is (Zn, Fe)Fe₂O₄ powder.

Examples of the black inorganic pigment powders containing Cu include Cu-Cr-based inorganic pigment powders and Cu-Fe-based inorganic pigment powders. Examples of the Cu-Cr-based inorganic pigment powders include Cu(Cr, Mn)₂O₄ powder and Cu-Cr-Mn powder. An example of the Cu-Fe-based inorganic pigment powders is Cu-Fe-Mn powder.

Pearlish pigments may be used as the color pigment. The pearlish pigments that can be used are, for example, those in which the surface of an extender pigment is coated with a metal oxide, and specific examples of the pearlish pigments that can be used are those in which mica, talc, kaolin, sericite, silicon oxide, calcium carbonate, barium sulfate or the like, which are extender pigments, is used as a base material and the surface of the base material is coated with titanium oxide, tin oxide, zirconium oxide, iron oxide or the like, which are metal oxides. Among them, a pearlish pigment in which natural mica is used as a base material and the surface thereof is coated with titanium oxide is preferably used. Thus, the design of the top plate 1 can be further increased. These pearlish pigments may be used singly or used in combination of two or more types.

The average particle diameter of the color pigment is preferably not less than 0.4 µm, more preferably not less than 0.5 µm, even more preferably not less than 0.6 µm, preferably not more than 16 µm, more preferably not more than 3 µm, and even more preferably not more than 2.8 µm. When the average particle diameter of the color pigment is not less than the above lower limit and not more than the above upper limit, aggregation of the color pigment is reduced. Therefore, color unevenness of the inorganic layer 3 can be effectively reduced and the color pigment of the inorganic layer 3 is less likely to protrude out from the surface of the inorganic layer 3. As a result, it can be prevented that, in assembling a cooking device using the top plate 1 or in using the assembled cooking device, surrounding parts, fingers or so on get caught on the surface of the inorganic layer 3 to peel off the inorganic layer 3.

The average particle diameter of the color pigment is a median diameter derived from a volume distribution measured by a laser diffraction and scattering method.

The content of the color pigment in the inorganic layer 3 (the content of the color pigment per 100% by mass of inorganic layer) is preferably not less than 10% by mass, more preferably not less than 25% by mass, preferably not more than 65% by mass, and more preferably not more than 55% by mass. When the above content of color pigment is not less than the above lower limit and not more than the above upper limit, the light transmissive portion D1 of the top plate 1 can easily obtain a desired light transmissiveness.

When the color pigment contains the above pearlish pigment, the content of the pearlish pigment in the inorganic layer 3 (the content of the pearlish pigment per 100% by mass of inorganic layer) is preferably not more than 20% by mass, more preferably not more than 15% by mass, even more preferably not more than 10% by mass, and still even more preferably not more than 7% by mass. If the content of the pearlish pigment is more than the above upper limit, the scratch resistance and the adhesion of the top plate 1 are less likely to be increased.

### <Extender Pigment>

The inorganic layer 3 contains an extender pigment. The extender pigment is an extender pigment having an average particle diameter of less than 0.5 µm. The extender pigment is a different material from the above glass and a different material from the above color pigment. With the use of the extender pigment, the scratch resistance of the inorganic layer 3 against the glass substrate 2 and the adhesion of the inorganic layer 3 to the glass substrate 2 can be increased. The extender pigment may be used as a single type or in combination of two or more types.

The reason why the scratch resistance and adhesion of the inorganic layer 3 increase with the use of the extender pigment is not clear, but can be considered as follows. Generally, extender pigments have a higher melting point than a glass frit, do not melt at the firing temperature of the glass frit, and therefore tend to interfere with the flow of molten glass frit during firing. The smaller the average particle diameter of the extender pigment, the lower the above tendency. Therefore, with the use of an extender pigment having an average particle diameter of less than 0.5 µm, the molten glass frit and the extender pigment are more likely to be mixed as compared to the case of use of an extender pigment having an average particle diameter of not less than 0.5 µm. Thus, the contact area between the molten glass frit and the extender pigment increases, which makes it likely that the adhesion between the glass and the extender pigment increases in the inorganic layer 3. It can be considered that, as a result, the hardness of the inorganic layer 3 increases and, thus, the scratch resistance thereof increases. The reason why the adhesion of the inorganic layer 3 increases can be considered as follows. With the use of an extender pigment having an average particle diameter of less than 0.5 µm, the flowability of the molten glass frit increases as described above. Therefore, the molten glass frit is likely to uniformly spread throughout the inorganic layer 3 and even the extender pigment present near the interface with the glass substrate 2 is well coated with the molten glass frit. In addition, an extender pigment having an average particle diameter of less than 0.5 µm has a larger surface area than an extender pigment having an average particle diameter of not less than 0.5 µm. It can be considered that, as a result, the contact area between the molten glass frit present near the interface with the glass substrate 2 and the back surface 2b of the glass substrate 2 increases and, thus, the inorganic layer 3 and the glass substrate 2 are strongly bonded together. Furthermore, since the adhesion increases as just described, the scratch resistance can be synergistically increased.

Examples of the extender pigment include talc, mica, calcium carbonate, glass beads, zirconium oxide, and barium sulfate.

The extender pigment is preferably a clear and colorless pigment, more preferably contains barium sulfate, and is even more preferably barium sulfate. Barium sulfate is a clear and colorless pigment and, therefore, can further increase the light transmissiveness of the inorganic layer 3. Barium sulfate described above may be barium sulfate subjected to surface treatment or may be barium sulfate not subjected to surface treatment. An example of barium sulfate subjected to surface treatment is barium sulfate treated with SiO₂-Al₂O₃.

From the viewpoint of exerting the effects of the present invention, the average particle diameter of the extender pigment is less than 0.5 µm. In order to further increase the scratch resistance and the adhesion of the inorganic layer 3, the average particle diameter of the extender pigment is preferably not less than 0.001 µm, more preferably not less than 0.005 µm, preferably not more than 0.3 µm, more preferably not more than 0.1 µm, even more preferably less than 0.1 µm, still even more preferably not more than 0.06 µm, and yet still even more preferably not more than 0.04 µm. On the other hand, in order to reduce sedimentation and separation of the extender pigment in the process of mixing components during production of a paint (a paste for forming an inorganic layer) to increase the productivity, the average particle diameter of the extender pigment is preferably not less than 0.05 µm, more preferably not less than 0.1 µm, preferably not more than 0.4 µm, and more preferably not more than 0.35 µm.

The average particle diameter of the extender pigment is a median diameter derived from a volume distribution measured by a laser diffraction and scattering method.

When the average particle diameter of the extender pigment is less than 0.1 µm, the content of the extender pigment in the inorganic layer 3 (the content of the extender pigment per 100% by mass of inorganic layer) is preferably not less than 10% by mass, more preferably not less than 15% by mass, even more preferably not less than 30% by mass, preferably not more than 55% by mass, and more preferably not more than 45% by mass. When the average particle diameter of the extender pigment is not less than 0.1 µm, the content of the extender pigment in the inorganic layer 3 (the content of the extender pigment per 100% by mass of inorganic layer) is preferably not less than 2% by mass, more preferably not less than 5% by mass, even more preferably not less than 10% by mass, preferably not more than 55% by mass, more preferably not more than 35% by mass, and even more preferably not more than 25% by mass. When the above content of extender pigment is not less than the above lower limit and not more than the above upper limit, the scratch resistance and the adhesion of the inorganic layer 3 can be further increased and the light transmissiveness of the inorganic layer 3 can be further increased.

In the inorganic layer 3, the mass ratio of the content of extender pigment to the content of color pigment (Content of Extender Pigment to Content of Color Pigment) is preferably not less than 0.1, more preferably not less than 0.15, even more preferably not less than 0.3, preferably not more than 2, more preferably not more than 1.5, and even more preferably not more than 1. When the above mass ratio (Content of Extender Pigment to Content of Color Pigment) is not less than the above lower limit and not more than the above upper limit, the light transmissiveness of the inorganic layer 3 can be further increased and, concurrently, the scratch resistance and the adhesion of the inorganic layer 3 can be further increased.

### <Other Details of Inorganic Layer>

The total content of the glass, the color pigment, and the extender pigment in the inorganic layer 3 (the total content of the glass, the color pigment, and the extender pigment per 100% by mass of inorganic layer) is preferably not less than 35% by mass, more preferably not less than 50% by mass, even more preferably not less than 99% by mass, particularly preferably not less than 99.5% by mass, and most preferably 100% by mass.

So long as the effects of the present invention are not interfered with, the inorganic layer 3 may contain other components different from the above three components: the glass, the color pigment, and the extender pigment (extender pigment having an average particle diameter of less than 0.5 µm). Examples of the other components include heat-resistant resins, such as silicone resin, and an extender pigment having an average particle diameter of not less than 0.5 µm. However, the smaller the content of the other components in the inorganic layer 3, the better.

The thickness of the inorganic layer 3 is preferably not less than 1 µm, more preferably not less than 1.5 µm, even more preferably not less than 2 µm, preferably not more than 10 µm, more preferably not more than 5 µm, even more preferably not more than 3 µm, and particularly preferably not more than 2.6 µm. When the thickness of the inorganic layer 3 is not less than the above lower limit, the color pigment and the extender pigment in the inorganic layer 3 are less likely to protrude out from the surface of the inorganic layer 3. As a result, it can be prevented that, in assembling a cooking device using the top plate 1 or in using the assembled cooking device, surrounding parts, fingers or so on get caught on the surface of the inorganic layer 3 to peel off the inorganic layer 3. Therefore, the adhesion of the inorganic layer 3 can be increased. When the thickness of the inorganic layer 3 is not more than the above upper limit, the light transmissiveness of the inorganic layer 3 can be further increased and, therefore, a desired light transmissiveness can be easily obtained. Furthermore, the amount of use of materials for use in forming the inorganic layer 3 can be reduced and, therefore, the production cost of the top plate 1 can be reduced. The thickness of the inorganic layer 3 can be measured with a scanning electron microscope (SEM).

### (Light-Shielding Layer)

The light-shielding layer 4 is disposed on the back surface 2b side of the glass substrate 2. The light-shielding layer 4 is in contact with the back surface 2b of the glass substrate 2. In the present invention, another layer may be disposed between the light-shielding layer 4 and the glass substrate 2. The light-shielding layer 4 is a layer for shielding light from the light source 20. Furthermore, the light-shielding layer 4 can increase the hideability of the internal structure of the cooker. In addition, by appropriately adjusting the color of the light-shielding layer 4, the design of the top plate 1 can be increased. A structure of any known light-shielding layer used in top plates can be adopted as the light-shielding layer 4.

The light-shielding layer 4 normally contains a color pigment. The light-shielding layer 4 may be a layer containing a heat-resistant resin and a color pigment or a layer containing a glass and a color pigment, but is preferably a layer containing a heat-resistant resin and a color pigment in terms of increasing the mechanical strength of the top plate 1.

### <Color Pigment>

Examples of the color pigment that can be used in the light-shielding layer 4 include color pigments described in the above chapter of the inorganic layer. The type of the color pigment can be appropriately changed according to the color and so on of a desired light-shielding layer. The color pigment may be used as a single type or in combination of two or more types.

The content of the color pigment in the light-shielding layer 4 (the content of the color pigment per 100% by mass of light-shielding layer) is preferably not less than 10% by mass, more preferably not less than 20% by mass, preferably not more than 70% by mass, and more preferably not more than 60% by mass. When the content of the color pigment is not less than the above lower limit, the light-shielding effect of the light-shielding layer 4 can be further increased. In addition, the hideability of the internal structure of the cooker can be further increased. When the content of the color pigment is not more than the above upper limit, the reduction in adhesion of the light-shielding layer 4 caused by a difference in coefficient of thermal expansion from the glass substrate 2 can be effectively reduced.

### <Heat-Resistant Resin>

Examples of the heat-resistant resin that can be used in the light-shielding layer 4 include silicone resin and polyimide resin. The heat-resistant resin may be used as a single type or in combination of two or more types.

In terms of further increasing the heat resistance, the heat-resistant resin is preferably silicone resin. The light-shielding layer 4 is preferably a layer containing silicone resin and a color pigment. In terms of even further increasing the heat resistance, the silicone resin is preferably silicone resin having a methyl group or a phenyl group as a functional group. In this case, a methyl group may be attached directly to a silicon atom, a phenyl group may be attached directly to a silicon atom, or a methyl group and a phenyl group may be attached directly to the same silicon atom.

The content of the heat-resistant resin in the light-shielding layer 4 (the content of the heat-resistant resin per 100% by mass of light-shielding layer) is preferably not less than 20% by mass, more preferably not less than 30% by mass, preferably not more than 70% by mass, and more preferably not more than 60% by mass. When the above content of heat-resistant resin is not less than the above lower limit, the heat resistance, the solvent resistance, and the impact resistance of the light-shielding layer 4 can be further increased. When the above content of heat-resistant resin is not more than the above upper limit, the mechanical strength of the top plate 1 can be further increased.

### <Glass>

Examples of the glass that can be used in the light-shielding layer 4 include glasses described in the above chapter of the inorganic layer. The glass may be used as a single type or in combination of two or more types.

The content of the glass in the light-shielding layer 4 (the content of the glass per 100% by mass of light-shielding layer) is preferably not less than 20% by mass, more preferably not less than 30% by mass, preferably not more than 70% by mass, and more preferably not more than 60% by mass. When the above content of glass is not less than the above lower limit, the strength and the heat resistance of the light-shielding layer 4 can be further increased. When the above content of glass is not less than the above lower limit and not more than the above upper limit, the adhesion of the light-shielding layer 4 can be further increased. In addition, even after the top plate 1 is used for a long period of time, the discoloration of the light-shielding layer 4 can be effectively reduced.

### <Extender Pigment>

The light-shielding layer 4 preferably contains an extender pigment. The extender pigment is a different material from the above glass and a different material from the above color pigment. The light-shielding layer 4 may be a layer containing a heat-resistant resin, a color pigment, and an extender pigment or a layer containing a glass, a color pigment, and an extender pigment, but is preferably a layer containing a heat-resistant resin, a color pigment, and an extender pigment in terms of increasing the mechanical strength of the top plate 1. The extender pigment may be used as a single type or in combination of two or more types.

Examples of the extender pigment that can be used in the light-shielding layer 4 include talc, mica, calcium carbonate, glass beads, barium sulfate, potassium titanate, calcium silicate, and titanium oxide.

In terms of further increasing the scratch resistance of the light-shielding layer 4, the extender pigment contained in the light-shielding layer 4 preferably contains a pigment having a needle-like shape (a needle-like pigment), more preferably contains at least one of potassium titanate having a needle-like shape, calcium silicate having a needle-like shape, and titanium oxide having a needle-like shape, and even more preferably contains potassium titanate having a needle-like shape.

Herein, whether or not the pigment has a needle-like shape can be checked by observing it with a scanning electron microscope, a transmission electron microscope or the like.

In terms of further increasing the scratch resistance of the light-shielding layer 4, the extender pigment contained in the light-shielding layer 4 preferably contains a pigment having a flaky shape (a flaky pigment), more preferably contains at least one of talc having a flaky shape and mica having a flaky shape, and even more preferably contains mica having a flaky shape.

Herein, whether or not the pigment has a flaky shape can be checked by observing it with a scanning electron microscope, a transmission electron microscope or the like.

In terms of further increasing the scratch resistance of the light-shielding layer 4, the extender pigment contained in the light-shielding layer 4 more preferably contains a needle-like pigment and a flaky pigment.

The reason why the scratch resistance of the light-shielding layer 4 further increases because the extender pigment in the light-shielding layer 4 contains a needle-like pigment and a flaky pigment is as follows. Each of the needle-like pigment and the flaky pigment functions as an aggregate in the light-shielding layer 4. Particularly, when the flaky pigment and the needle-like pigment are intertangled with each other or particles of the needle-like pigment are intertangled with each other, the hardness of the light-shielding layer 4 can be further increased and, thus, the production of scratches due to external impact can be reduced.

When the light-shielding layer 4 contains an extender pigment, the content of the extender pigment in the light-shielding layer 4 (the content of the extender pigment per 100% by mass of light-shielding layer) is preferably not less than 3% by mass, more preferably not less than 10% by mass, preferably not more than 70% by mass, and more preferably not more than 60% by mass. When the above content of extender pigment is not less than the above lower limit and not more than the above upper limit, the scratch resistance of the light-shielding layer 4 can be further increased.

When the light-shielding layer 4 contains a needle-like pigment, the content of the needle-like pigment in the light-shielding layer 4 (the content of the needle-like pigment per 100% by mass of light-shielding layer) is preferably not less than 1% by mass, more preferably not less than 10% by mass, preferably not more than 50% by mass, and more preferably not more than 30% by mass. When the above content of needle-like pigment is not less than the above lower limit and not more than the above upper limit, the scratch resistance of the light-shielding layer 4 can be more effectively increased.

When the light-shielding layer 4 contains a flaky pigment, the content of the flaky pigment in the light-shielding layer 4 (the content of the flaky pigment per 100% by mass of light-shielding layer) is preferably not less than 1% by mass, more preferably not less than 10% by mass, preferably not more than 50% by mass, and more preferably not more than 30% by mass. When the above content of flaky pigment is not less than the above lower limit and not more than the above upper limit, the scratch resistance of the light-shielding layer 4 can be more effectively increased.

The mass ratio of the content of the flaky pigment to the content of the needle-like pigment (content of flaky pigment to content of needle-like pigment) in the light-shielding layer 4 is preferably not more than 10 and more preferably not more than **3.** When the above mass ratio (content of flaky pigment to content of needle-like pigment) is not more than the above upper limit, the occurrence of surface layer delamination of the light-shielding layer 4 can be prevented and the scratch resistance of the light-shielding layer 4 can be more effectively increased.

### <Other Details of Light-Shielding Layer>

So long as the effects of the present invention are not interfered with, the light-shielding layer 4 may contain components other than the above four components: the glass, the heat-resistant resin, the color pigment, and the extender pigment.

The thickness of the light-shielding layer 4 is preferably not less than 5 µm, more preferably not less than 10 µm, preferably not more than 30 µm, and more preferably not more than 20 µm. When the thickness of the light-shielding layer 4 is not less than the above lower limit, the light-shielding effect of the light-shielding layer 4 can be further increased. In addition, the hideability of the internal structure of the cooker can be further increased. Furthermore, the color pigment and the extender pigment in the light-shielding layer 4 are less likely to protrude out from the surface of the light-shielding layer 4. As a result, it can be prevented that, in assembling a cooking device using the top plate 1 or in using the assembled cooking device, surrounding parts, fingers or so on get caught on the surface of the light-shielding layer 4 to peel off the light-shielding layer 4. When the thickness of the light-shielding layer 4 is not more than the above upper limit, the reduction in adhesion of the light-shielding layer 4 caused by a difference in coefficient of thermal expansion can be effectively reduced. The thickness of the light-shielding layer 4 can be measured with a scanning electron microscope (SEM).

### (Other Details of Top Plate)

The light transmittance of the transmissive portion D1 at a wavelength of 580 nm is preferably not less than 1%, more preferably not less than 3%, even more preferably not less than 5%, particularly preferably not less than 8%, preferably not more than 50%, more preferably not more than 40%, even more preferably not more than 15%, and particularly preferably not more than 10%. When the above light transmittance is not less than the above lower limit, the visibility of information displayed on the transmissive portion D1 during lighting of the light source 20 can be further increased. When the above light transmittance is not more than the above upper limit, the hideability of the internal structure of the cooker in a state where light is not emitted from the light source 20 (for example, in a power-off state) can be increased.

The light transmittance of the non-transmissive portion D2 at a wavelength of 580 nm is preferably not more than 15%, more preferably not more than 5%, and even more preferably not more than 1%. When the above light transmittance is not more than the above upper limit, the light-shielding effect can be further increased. In addition, the hideability of the internal structure of the cooker can be further increased.

The absolute value of the difference between the light transmittance of the transmissive portion D1 at a wavelength of 580 nm and the light transmittance of the non-transmissive portion D2 at a wavelength of 580 nm is preferably not less than 3%, more preferably not less than 5%, preferably not more than 50%, and more preferably not more than 40%.

### (Manufacturing Method)

A method for manufacturing a top plate 1 includes, for example, the steps of: applying a paste for forming an inorganic layer to the back surface 2b side of a glass substrate 2; and firing the glass substrate 2 to which the paste for forming an inorganic layer is applied. The method for manufacturing a top plate 1 preferably includes the step of applying a paste for forming a light-shielding layer to the back surface 2b side of the glass substrate 2 and preferably includes the step of firing the glass substrate 2 to which the paste for forming a light-shielding layer is applied.

### Method for Forimg Inorganic Layer:

The paste for forming an inorganic layer is a material for the inorganic layer 3 and contains a glass frit, a color pigment, and an extender pigment having an average particle diameter of less than 0.5 µm. The paste for forming an inorganic layer preferably contains a resin binder, a solvent or like component volatilizable by heating.

The paste for forming an inorganic layer is applied to a specified region located toward the back surface 2b of the glass substrate 2. The paste for forming an inorganic layer is preferably applied continuously and uniformly. An example of the method for applying the paste for forming an inorganic layer is screen printing. Furthermore, in this case, masking can be done by providing a mask on a screen plate for printing.

The application speed and viscosity of the paste for forming an inorganic layer can be appropriately selected according to the content of color pigment and extender pigment in the paste for forming an inorganic layer.

The method for manufacturing a top plate 1 may include or may not include the step of drying the paste for forming an inorganic layer. The drying temperature in the step of drying the paste for forming an inorganic layer may be, for example, a temperature of not lower than 50°C and not higher than 100°C, and the drying time may be, for example, not less than 30 seconds and not more than 100 hours.

Subsequently, the glass substrate 2 to which the paste for forming an inorganic layer is applied is fired. By firing, the glass frit melts and, thus, an inorganic layer 3 containing glass is obtained. Since the paste for forming an inorganic layer contains the extender pigment, in the step of firing the glass substrate 2 to which the paste for forming an inorganic layer is applied, the flowability of the molten glass frit is less likely to be interfered with and the molten glass frit can easily spread near the surface of the inorganic layer 3 next to the glass substrate **2.** Therefore, the molten glass frit can be effectively located near the surface of the inorganic layer 3 next to the glass substrate **2.** As a result, the adhesion of the inorganic layer 3 can be increased. The firing temperature is not particularly limited, but is preferably not lower than 700°C and more preferably not lower than 800°C. Furthermore, the firing temperature is preferably not higher than 900°C and more preferably not higher than 850°C. The firing time may be, for example, not less than 10 minutes and not more than 3 hours.

### Method for Forimg Light-Shielding Layer:

The paste for forming a light-shielding layer is a material for the light-shielding layer **4.** The paste for forming a light-shielding layer may contain a glass frit and a color pigment or may contain a heat-resistant resin component and a color pigment. The paste for forming a light-shielding layer preferably contains a solvent or like component volatilizable by heating. Furthermore, the paste for forming a light-shielding layer may contain an extender pigment.

The paste for forming a light-shielding layer is applied to a specified region located toward the back surface 2b of the glass substrate 2. The paste for forming a light-shielding layer is preferably applied continuously and uniformly. An example of the method for applying the paste for forming a light-shielding layer is screen printing. Furthermore, in this case, masking cab be done by providing a mask on a screen plate for printing.

The application speed and viscosity of the paste for forming a light-shielding layer can be appropriately selected according to the content of color pigment and extender pigment in the paste for forming a light-shielding layer.

The method for manufacturing a top plate 1 preferably includes the step of drying the paste for forming a light-shielding layer. The drying temperature in the step of drying the paste for forming a light-shielding layer may be, for example, a temperature of not lower than 50°C and not higher than 100°C, and the drying time may be, for example, not less than 30 seconds and not more than 100 hours.

The method for manufacturing a top plate 1 may include the step of firing the glass substrate 2 to which the paste for forming a light-shielding layer is applied. When the paste for forming a light-shielding layer contains a glass frit and a color pigment, the method for manufacturing a top plate 1 preferably includes the step of firing the glass substrate 2 to which the paste for forming a light-shielding layer is applied. The firing temperature is not particularly limited, but is preferably not lower than 100°C and more preferably not lower than 150°C. Furthermore, the firing temperature is preferably not higher than 500°C and more preferably not higher than 450°C. The firing time may be, for example, not less than 1 minute and not more than 3 hours.

In the method for manufacturing a top plate 1, the light-shielding layer 4 may be formed after the formation of the inorganic layer 3, or the inorganic layer 3 may be formed after the formation of the light-shielding layer **4.** In the method for manufacturing a top plate 1, the paste for forming a light-shielding layer may be applied after the application of the paste for forming an inorganic layer, or the paste for forming an inorganic layer may be applied after the application of the paste for forming a light-shielding layer. The drying of the paste for forming an inorganic layer and the drying of the paste for forming a light-shielding layer may be conducted separately or conducted concurrently. The firing of the glass substrate 2 to which the paste for forming an inorganic layer is applied and the firing of the glass substrate 2 to which the paste for forming a light-shielding layer is applied may be conducted separately or conducted concurrently.

### [Second Embodiment]

Fig. 2 is a schematic cross-sectional view showing a cooker top plate according to a second embodiment of the present invention.

A cooker top plate 1A shown in Fig. 2 includes a glass substrate 2. The glass substrate 2 has a cooking surface 2a and an back surface 2b. The cooking surface 2a and the back surface 2b are surfaces opposed to each other. The cooking surface 2a is a surface located on the side of the substrate where a cooking utensil, such as a pot or a frying pan, is to be put. The back surface 2b is a surface located toward the interior of the cooker and facing toward a light source and a heater. Therefore, the cooking surface 2a and the back surface 2b are top and under sides of the same substrate.

An inorganic layer 3A is disposed on the back surface 2b of the glass substrate 2. The back surface 2b of the glass substrate 2 is in contact with the inorganic layer 3A. The inorganic layer 3A contains a glass, a color pigment, and an extender pigment having an average particle diameter of less than 0.5 µm.

A light-shielding layer 4A is disposed toward the back surface 2b of the glass substrate 2. The light-shielding layer 4A is disposed on one surface of the inorganic layer 3A located on the opposite side to the other surface thereof next to the glass substrate 2. The inorganic layer 3A and the light-shielding layer 4A are in contact with each other. The back surface 2b of the glass substrate 2 does not contact the light-shielding layer 4.

The light-shielding layer 4A normally contains a color pigment. The light-shielding layer 4A may be a layer containing a heat-resistant resin and a color pigment or a layer containing a glass and a color pigment. Furthermore, the light-shielding layer 4A may contain an extender pigment.

A light source 20 is provided below the top plate 1A.

The top plate 1A includes: a transmissive portion D1 that transmits light from the light source 20; and a non-transmissive portion D2 that shields light from the light source 20. In the top plate 1A, the inorganic layer 3A is a layer capable of transmitting light from the light source 20, and the light-shielding layer 4A is a layer for use in shielding light from the light source 20. The transmissive portion D1 of the top plate 1A includes the inorganic layer 3A and, more specifically, includes the inorganic layer 3A and the glass substrate 2. The non-transmissive portion D2 of the top plate 1A includes the light-shielding layer 4A and, more specifically, includes the light-shielding layer 4A, the inorganic layer 3A, and the glass substrate 2. The transmissive portion D1 corresponds to a portion of the top plate 1A where the light-shielding layer 4A is not disposed. The non-transmissive portion D2 corresponds to a portion of the top plate 1A where the light-shielding layer 4A is disposed.

Since, in the top plate 1A, the inorganic layer 3A contains a glass, a color pigment, and an extender pigment, the scratch resistance and the adhesion of the inorganic layer 3A can be increased. In the top plate 1A, the adhesion between the glass substrate 2 and the inorganic layer 3A and the scratch resistance of the inorganic layer 3A can be increased.

Also when the inorganic layer 3A contains a glass, a color pigment, and barium sulfate, the scratch resistance and the adhesion of the inorganic layer 3A can be increased. In this case, the average particle diameter of barium sulfate in the inorganic layer 3A is preferably less than 0.5 µm.

The details of the glass substrate 2 are as described in the first embodiment and, therefore, further description thereof will be omitted. Furthermore, the preferred forms regarding the inorganic layer 3A in this embodiment, including the preferred composition of the inorganic layer 3A and the respective preferred compositions of the glass, the color pigment, and the extender pigment in the inorganic layer 3A, are the same as the preferred forms regarding the inorganic layer 3 described in the first embodiment. Moreover, the preferred forms regarding the light-shielding layer 4A in this embodiment, including the preferred composition of the light-shielding layer 4A and the respective preferred compositions of the heat-resistant resin, the glass, the color pigment, and the extender pigment in the light-shielding layer 4A, are the same as the preferred forms regarding the light-shielding layer 4 described in the first embodiment. Also, the respective preferred forms of the light transmittance of the transmissive portion D1 of the top plate 1A at a wavelength of 580 nm and the light transmittance of the non-transmissive portion D2 of the top plate 1A at a wavelength of 580 nm are the same as the respective preferred forms of the light transmittances of the transmissive portion D1 and the non-transmissive portion D2 of the top plate 1 described in the first embodiment.

In the top plate 1A, the total thickness of the inorganic layer 3A and the light-shielding layer 4A is preferably not less than 5 µm, more preferably not less than 6 µm, preferably not more than 30 µm, and more preferably not more than 20 µm. The total thickness of the inorganic layer 3A and the light-shielding layer 4A can be measured with a scanning electron microscope (SEM).

Also for the method for manufacturing the top plate 1A, the same method as in the first embodiment can be adopted except that the light-shielding layer 4A is formed after the formation of the inorganic layer 3A.

As shown in each of the above-described embodiments, the inorganic layer of the top plate according to the present invention contains a glass, a color pigment, and an extender pigment. The inorganic layer is located on the back surface side of the glass substrate. In the present invention, the inorganic layer may be in contact with the back surface of the glass substrate or another layer may be disposed between the inorganic layer and the glass substrate. However, the inorganic layer is preferably in contact with the back surface of the glass substrate.

As shown in each of the above-described embodiments, the top plate according to the present invention preferably includes a light-shielding layer. As shown in the first embodiment, the light-shielding layer and the inorganic layer may be arranged side by side in a direction orthogonal to the direction of the thickness of the top plate. As shown in the second embodiment, the light-shielding layer and the inorganic layer may be arranged one on the other in the direction of the thickness of the top plate.

The top plate according to the present invention may include a layer different from both the inorganic layer and the light-shielding layer. For example, the top plate according to the present invention may include a transparent resin layer containing a heat-resistant resin (for example, silicone resin or polyimide resin). The transparent resin layer may be disposed on one surface of the inorganic layer located on the opposite side to the other surface thereof next to the glass substrate, disposed on one surface of the light-shielding layer located on the opposite side to the other surface thereof closer to the glass substrate, or disposed on both the one surface of the inorganic layer located on the opposite side to the other surface thereof next to the glass substrate and the one surface of the light-shielding layer located on the opposite side to the other surface thereof closer to the glass substrate. The transmissive portion of the top plate according to the present invention may include the above-described transparent resin layer. The non-transmissive portion of the top plate according to the present invention may include the above-described transparent resin layer. The transmissive portion of the top plate according to the present invention preferably includes the above-described transparent resin layer. The transparent resin layer is normally a layer free of color pigment. The transparent resin layer is preferably a layer containing the above-described heat-resistant resin only.

Hereinafter, a description will be given in further detail of the present invention with reference to examples. However, the following examples are merely illustrative. The present invention is not at all limited by the following examples.

A glass substrate below was prepared.

A clear crystallized glass sheet ("N-0" manufactured by Nippon Electric Glass Co., Ltd., average coefficient of linear thermal expansion at 30°C to 750°C: 0.5 × 10⁻⁷/°C, thickness: 4 mm)

Materials for an inorganic layer described below were prepared.

### Glass Frit:

Glass frit ("Frit NPF" manufactured by Nippon Electric Glass Co., Ltd.)

### Color Pigment:

Black pigment (average particle diameter: 0.8 µm)
Pearlish pigment (pigment formed of natural mica coated with a titanium oxide layer, average particle diameter: 1 µm to 15 µm)

### Extender Pigment:

Barium sulfate A ("BF-40" manufactured by Sakai Chemical Industry Co., Ltd., average particle diameter: 0.01 µm)
Barium sulfate B ("BF-20" manufactured by Sakai Chemical Industry Co., Ltd., average particle diameter: 0.03 µm)
Barium sulfate C ("BF-34" manufactured by Sakai Chemical Industry Co., Ltd., average particle diameter: 0.3 µm, barium sulfate treated (surface treated) with SiO₂-Al₂O₃)

### Resin Binder

Materials for a light-shielding layer described below were prepared.

### Silicone Resin:

Methylphenyl silicone resin ("TSR-145" manufactured by Momentive Performance Materials)

### Color Pigment:

Black pigment (average particle diameter: 0.8 µm)

### Extender Pigment:

Needle-like pigment: potassium titanate ("TISMO D" manufactured by Otsuka Chemical Co., Ltd.)
Flaky pigment: mica

### Solvent:

Xylene

### (Example 1)

### Preparation of Paste for Forming Inorganic Layer:

A glass frit, a black pigment, barium sulfate A, and a resin binder were mixed at a mass ratio ((glass frit): (black pigment): (barium sulfate A): (resin binder)) of 12:12:16:60, thus preparing a paste for forming an inorganic layer.

### Preparation of Paste for Forming Light-Shielding Layer:

Silicone resin, a black pigment, an extender pigment (a needle-like pigment and a flaky pigment), and a solvent were mixed at a mass ratio ((silicone rein): (black pigment): (needle-like pigment): (flaky pigment):solvent) of 50:20:5:15:10, thus preparing a paste for forming a light-shielding layer.

### Production of Cooker Top Plate:

The paste for forming an inorganic layer was screen-printed on a region of the back surface of the clear crystallized glass sheet corresponding to a transmissive portion to have a thickness of 2.5 µm. Subsequently, the paste was dried by the application of heat at 80°C for one minute and then fired at 800°C for 30 minutes, thus forming an inorganic layer. Subsequently, the paste for forming a light-shielding layer was screen-printed on a region of the back surface of the clear crystallized glass sheet corresponding to a non-transmissive portion to have a thickness of 15 µm. Subsequently, the paste was fired at 300°C for 10 minutes, thus forming a light-shielding layer. The resin binder was fully volatilized by the drying by the application of heat. Furthermore, Table 1 describes the respective contents of components in the inorganic layer and the light-shielding layer.

### (Examples 2 to 13 and Comparative Examples (Comp. Ex.) 1 and 2)

Cooker top plates were produced in the same manner as in Example 1 except that the types and contents of the color pigment and the extender pigment in the paste for forming an inorganic layer were changed and the composition and thickness of the inorganic layer were changed as shown in Tables 1 and 2.

### [Evaluations]

### (1) Scratch Resistance and Adhesion of Inorganic Layer

Each of the obtained cooker top plates was placed on a flat desk with its cooking surface in contact with the desk surface. Disposable chopsticks (Shokurin Genroku-Bashi manufactured by Yanagi Products Co., Ltd.) were fixed to a pencil hardness tester and set with the distal ends of the chopsticks in contact with the surface of the top plate. The pencil hardness tester was moved back and forth ten times over a distance of 30 mm at a rate of 5 cm/sec. Thereafter, the portion of the top plate where the chopsticks moved back and forth was irradiated through the cooking surface of the top plate with light of a while light source, and the boundaries between the portion where the chopsticks moved back and forth and the other portion of the top plate were visually observed from the back surface of the top plate. The scratch resistance and the adhesion of the inorganic layer were evaluated based on the following evaluation criteria.

### <Evaluation Criteria>

OO: Boundaries were not visible.
O: Boundaries were barely visible and the portion where chopsticks moved back and forth was dark grey in color.
Δ: Boundaries were clearly visible, but the portion where chopsticks moved back and forth was grey in color.
X: Boundaries were clearly visible and the portion where chopsticks moved back and forth was close to white.

### (2) Light Transmittance

Each of the obtained cooker top plates was measured in terms of light transmittance of the transmissive portion at a wavelength of 580 nm and light transmittance of the non-transmissive portion at a wavelength of 580 nm, with a spectro-photometer ("V-770" manufactured by JASCO Corporation).

### (3) Mechanical Strength of Top Plate

A steel ball falling test was conducted by a method conforming to the UL 858 standard. Specifically, for each of the obtained cooker top plates, a steel ball having a mass of 535 g and a diameter of 50.8 mm was let fall on a central portion of the cooking surface of the cooker top plate from a height of 100 mm above the cooking surface of the cooker top plate. The height from which the steel ball was let fall was increased in increments of 100 mm, the height when the cooker top plate was first broken was defined as a height upon breakage, and the value obtained by subtracting 100 mm from the height upon breakage was recorded. The above test was conducted five times and the average of the values obtained from the test for five times was used as an evaluation indicator for mechanical strength. The averages are shown in Tables 1 and 2.

The details and results are shown Tables 1 and 2 below.

**[Table 1]**

| | | | | | Ex.1 | Ex.2 | Ex.3 | Ex.4 | Ex.5 | Ex.6 | Ex.7 | Ex.8 |
|---|---|---|---|---|---|---|---|---|---|---|---|---|
| | Glass | | | % by mass | 30 | 30 | 30 | 30 | 30 | 30 | 30 | 30 |
| | Color Pigment | black pigment (average particle diameter: 0.8 *µ*m) | | % by mass | 30 | 50 | 50 | 30 | 30 | 50 | 50 | 30 |
| | | pearlish pigment (average particle diameter: 1-15µm) | | % by mass | 0 | 0 | 0 | 0 | 0 | 0 | 0 | 0 |
| Inorganic Layer | Extender Pigment | barium sulfate A (average particle diameter: 0.01 *µ*m) | | % by mass | 40 | 20 | 20 | 0 | 0 | 0 | 0 | 0 |
| | | barium sulfate B (average particle diameter: 0.03 *µ*m) | | % by mass | 0 | 0 | 0 | 40 | 40 | 20 | 20 | 0 |
| | | barium sulfate C (average particle diameter: 0.3 *µ*m) | | % by mass | 0 | 0 | 0 | 0 | 0 | 0 | 0 | 40 |
| | Total | | | % by mass | 100 | 100 | 100 | 100 | 100 | 100 | 100 | 100 |
| | Content of Extender Pigment to Content of Color Pigment | | | - | 1.3 | 0.4 | 0.4 | 1.3 | 1.3 | 0.4 | 0.4 | 1.3 |
| | Thickness | | | *µ*m | 2.5 | 2.5 | 2.4 | 2 | 2.5 | 2.7 | 2.6 | 2.5 |
| Light-Shielding Layer | Silicone Resin | | | % by mass | 55 | | | | | | | |
| | Color Pigment | black pigment | | % by mass | 22 | | | | | | | |
| | Extender Pigment | needle-like pigment: potassium titanate | | % by mass | 6 | | | | | | | |
| | | flaky pigment: mica | | % by mass | 17 | | | | | | | |
| | Total | | | % by mass | 100 | | | | | | | |
| | Thickness | | | *µ*m | 15 | | | | | | | |
| Evaluations | Mechanical Strength of Top Plate | | | mm | 720 | 800 | 833 | 820 | 800 | 700 | 900 | 700 |
| | Scratch Resistance and Adhesion of Inorganic Layer | | | | ○○ | ○ | ○ | Δ | ○○ | ○ | ○ | Δ |
| | Light Transmittance (at 580 nm wavelength) | | Transmissive portion | % | 9.9 | 5.1 | 5.2 | 24.5 | unmeasured | 3.8 | 4 | unmeasured |
| | | | Non-Transmissive portion | % | 0 | 0 | 0 | 0 | 0 | 0 | 0 | 0 |

**[Table 2]**

| | | | | | Ex.9 | Ex.10 | Ex.11 | Ex.1 2 | Ex.1 3 | Comp. Ex.1 | Comp. Ex.2 |
|---|---|---|---|---|---|---|---|---|---|---|---|
| | Glass | | | % by mass | 30 | 30 | 30 | 30 | 30 | 30 | 30 |
| | Color Pigment | black pigment (average particle diameter: 0.8 µm) | | % by mass | 60 | 55 | 50 | 25 | 20 | 70 | 70 |
| | | pearlish pigment (average particle diameter: 1-15µm) | | % by mass | 0 | 0 | 0 | 5 | 10 | 0 | 0 |
| | Extender Pigment | barium sulfate A (average particle diameter: 0.01 µm) | | % by mass | 0 | 0 | 0 | 0 | 0 | 0 | 0 |
| Inorganic Layer | | barium sulfate B (average particle diameter: 0.03 µm) | | % by mass | 0 | 0 | 0 | 0 | 0 | 0 | 0 |
| | | barium sulfate C (average particle diameter: 0.3 *µ*m) | | % by mass | 10 | 15 | 20 | 40 | 40 | 0 | 0 |
| | Total | | | % by mass | 100 | 100 | 100 | 100 | 100 | 100 | 100 |
| | Content of Extender Pigment to Content of Color Pigment | | | - | 0.2 | 0.3 | 0.4 | 1.3 | 1.3 | 0 | 0 |
| | Thickness | | | µm | 3.4 | 3.3 | 4.1 | 3.7 | 4.5 | 2.3 | 2.5 |
| Light-Shielding Layer | Silicone Resin | | | % by mass | 55 | | | | | | |
| | Color Pigment | black pigment | | % by mass | 22 | | | | | | |
| | Extender Pigment | needle-like pigment: potassium titanate | | % by mass | 6 | | | | | | |
| | | flaky pigment: mica | | % by mass | 17 | | | | | | |
| | Total | | | % by mass | 100 | | | | | | |
| | Thickness | | | µm | 15 | | | | | | |
| Evaluations | Mechanical Strength of Top Plate | | | mm | 1000 | >1000 | 800 | 800 | >1000 | >1000 | 875 |
| | Scratch Resistance and Adhesion of Inorganic Layer | | | | ○○ | ○○ | ○○ | ○ | Δ | × | × |
| | Light Transmittance (at 580 nm wavelength) | | Transmissive portion | % | 0.7 | 0.9 | 1.1 | 6.4 | 10.9 | 7.4 | 3.9 |
| | | | Non-Transmissive portion | % | 0 | 0 | 0 | 0 | 0 | 0 | 0 |

As is obvious from Tables 1 and 2, Examples 1 to 13 contained an extender pigment having an average particle diameter of less than 0.5 µm and, therefore, showed positive results in terms of scratch resistance and adhesion of the inorganic layers as compared to Comparative Examples. Furthermore, all of Examples 1 to 13 showed a sufficient mechanical strength for a top plate. On the other hand, the inorganic layers in Comparative Examples 1 and 2 showed poor scratch resistance and adhesion.

### [Reference Signs List]

1, 1A ... cooker top plate
2 ... glass substrate
2a ... cooking surface
2b ... back surface
3, 3A ... inorganic layer
4, 4A ... light-shielding layer
20 ... light source
D1 ... transmissive portion
D2 ... non-transmissive portion

## Claims

1. A cooker top plate comprising:
a glass substrate having a cooking surface on which a cooking utensil is to be put and a back surface on an opposite side to the cooking surface; and
an inorganic layer located on the back surface side of the glass substrate,
the inorganic layer containing a glass, a color pigment, and an extender pigment having an average particle diameter of less than 0.5 µm.

2. The cooker top plate according to claim 1, comprising a transmissive portion that transmits light from a light source, wherein the transmissive portion includes the inorganic layer.

3. The cooker top plate according to claim 2, wherein the extender pigment contains barium sulfate.

4. The cooker top plate according to claim 2 or 3, wherein a content of the extender pigment per 100% by mass of the inorganic layer is not less than 10% by mass and not more than 55% by mass.

5. The cooker top plate according to claim 2 or 3, wherein the color pigment has an average particle diameter of not less than 0.4 µm and not more than 3 µm.

6. The cooker top plate according to claim 2 or 3, comprising a non-transmissive portion that shields light from the light source, wherein the non-transmissive portion includes a light-shielding layer provided on the inorganic layer.

7. A cooker top plate comprising:
a glass substrate having a cooking surface on which a cooking utensil is to be put and a back surface on an opposite side to the cooking surface; and
an inorganic layer located on the back surface side of the glass substrate,
the inorganic layer containing a glass, a color pigment, and barium sulfate.

8. A method for manufacturing a cooker top plate comprising:
a glass substrate having a cooking surface on which a cooking utensil is to be put and a back surface on an opposite side to the cooking surface; and
an inorganic layer located on the back surface side of the glass substrate,
the method comprising the steps of:
applying a paste for forming an inorganic layer to the back surface side of the glass substrate; and
firing the glass substrate to which the paste for forming an inorganic layer is applied,
wherein the paste for forming an inorganic layer contains a glass frit, a color pigment, and an extender pigment having an average particle diameter of less than 0.5 µm.

9. The method for manufacturing a cooker top plate according to claim 8, wherein the extender pigment contains barium sulfate.
